# EUROPEAN PATENT APPLICATION

(11) **EP 4 711 035 A1**
(43) Date of publication of application: **18.03.2026**
(21) Application number: 24200239.2
(22) Date of filing: 13.09.2024
(51) Int. Cl.: B01F 27/88, B01F 35/41, F16C 11/10, F16B 2/14, F16C 3/02

(54) **SHAFT FIXTURE ARRANGEMENT, SYSTEM AND METHOD FOR RELEASABLY FIXING A ROTARY SHAFT OF AN AGITATOR SYSTEM**

(71) Applicant: Alfa Laval Corporate AB, 221 00 Lund (SE)
(72) Inventor: THORØE-BJERRISGAARD, Søren, DK-6580 VAMDRUP (DK)
(74) Representative: Alfa Laval Attorneys

(57) **Abstract**

The present invention relates to a shaft fixture arrangement (100) for releasably fixing a rotary shaft (12) of an agitator system (10) in relation to an opening (52) in a vessel (50). The shaft fixture arrangement (100) comprising: two or more fixture elements (102) configured to jointly fix the rotary shaft (12) in relation to the opening (52) by engaging the rotary shaft (12) such that the rotary shaft (12) is clamped between the two or more fixture elements (102). Each fixture element (102) comprising, an inwardly facing circumferentially extending shaft clamping surface (104) configured to abut an outer circumferentially extending surface portion (12a) of the rotary shaft, and an outwardly facing circumferentially extending opening abutment surface configured to abut an inwardly facing surface portion (52a) surrounding the opening. A system (20) and a method of for releasably fixing a rotary shaft (12) of an agitator system (1) are also provided.

## Description

### Technical Field

The invention relates to the field of agitators. More particularly, it is related to a shaft fixture arrangement for releasably fixing a rotary shaft of an agitator system extending into a vessel through an opening in the vessel in a first axial direction; a system comprising the shaft fixture arrangement; and a method of releasably fixing a rotary shaft of an agitator system extending into a vessel through an opening in the vessel in a first axial direction, using the shaft fixture arrangement.

### Background Art

Agitators are used in numerous applications. In for example, the food industry, the pharma industry, and the chemical industry, mixing tanks including agitators are used in various processing operations where a product or similar held in a mixing tank is to be mixed or agitated. Agitators are commonly used where two or more constituents are to be mixed. Further, agitators are commonly used for preventing solids or particles dispersed in a liquid from floating to the surface or from sinking to the bottom.

Agitators for tanks typically include a rotatable shaft which is provided with one or more impellers or agitator blades used to agitate a product held in a tank.

When an agitator is serviced, it is common practice to remove the motor and other wear parts, while leaving the rotatable shaft and its impellers in the tank. This means that the rotatable shaft will have to be fixed in relation to the tank. If the rotatable shaft is not fixed properly in relation to the tank, there is a risk that the shaft risks falling into the tank, potentially damaging the tank and the rotatable shaft.

Sometimes it is desirable to install the rotatable shaft in the tank already when fabricating the tank at the tank builder's site. This may for instance be the case when there is limited space at the final location of the tank or when the rotatable shaft is to be provided with one or more large impellers which are hard to mount at the final location of the tank. In such cases, it is common practice to install more delicate parts of the agitator, such as the motor and the bearings, at the final location of the tank. This means that the rotatable shaft will have to be fixed in relation to the tank during transportation of the tank to its final location, or else the tank and the rotatable shaft risk getting damaged during the transportation.

In the above situations, where the rotatable shaft is to be fixed in relation to the tank, it is common practice to build a temporary fixture from planks or similar simple material.

Although a temporary fixture built from planks can function to satisfaction in many situations, there are several outspoken drawbacks associated with such temporary fixing arrangements.

It is for instance time consuming to build a temporary fixture meaning that the costs associated with such fixture is significant in terms of labor although the planks used may not be particularly expensive.

Further, a temporary fixture built from e.g. planks is generally not precise in terms of fit. Thus, the rotatable shaft risks ending up in a wrongful position in relation to the tank with the consequence of an unnecessarily complicated mounting process when it comes to mounting the other parts of the agitator.

Another problem resides in that such temporary fixtures risk contaminating the tank and the rotatable shaft resulting in time consuming undesired cleaning and disinfection.

Yet another problem resides in that such temporary fixtures represent a safety hazard for personnel. In case a temporary fixture breaks or fails, the rotatable shaft may fall uncontrollably with the risk of hitting or crushing the personnel mounting or servicing the agitator.

Hence, there is room for improvement when it comes to releasably fixing a rotatable shaft of an agitator system extending into a tank in relation to the tank.

### Summary

With the above in mind, it is an objective of the present invention to provide a shaft fixture arrangement for releasably fixing a rotary shaft of an agitator system extending into a vessel through an opening in the vessel in a first axial direction, as well as a system for releasably fixing a rotary shaft of an agitator system extending into a vessel through an opening in the vessel in a first axial direction, and a method of releasably fixing a rotary shaft of an agitator system extending into a vessel through an opening in the vessel in a first axial direction.

Another objective is to provide such a shaft fixture arrangement which is more precise in terms of fit.

Another objective is to provide such a shaft fixture arrangement which is safe to use.

Another objective is to provide such a shaft fixture arrangement which is more efficient in terms of time and labor.

Another objective is to provide such a shaft fixture arrangement which is easy to use.

Another objective is to provide such a shaft fixture arrangement which is less prone to contaminating the agitator system and the vessel.

Another objective is to provide such a shaft fixture arrangement which is cost-effective.

Another objective is to provide such a shaft fixture arrangement which may be used irrespective of an orientation of the rotary shaft assembly.

To achieve at least one of the above objects and also other objects that will be evident from the following description, a shaft fixture arrangement for releasably fixing a rotary shaft of an agitator system extending into a vessel through an opening in the vessel in a first axial direction, having the features defined in claim 1 is provided according to the present inventive concept. A system for releasably fixing a rotary shaft of an agitator system extending into a vessel through an opening in the vessel in a first axial direction comprising a shaft fixture arrangement is provided according to claim 14. A method of releasably fixing a rotary shaft of an agitator system extending into a vessel through an opening in the vessel in a first axial direction using a shaft fixture arrangement is provided according to claim 15.

More specifically, according to a first aspect, there is provided a shaft fixture arrangement for releasably fixing a rotary shaft of an agitator system extending into a vessel through an opening in the vessel in a first axial direction, the shaft fixture arrangement comprising:
two or more fixture elements configured to jointly fix the rotary shaft in relation to the opening by engaging the rotary shaft such that the rotary shaft is clamped between the two or more fixture elements, each fixture element comprising,
an inwardly facing circumferentially extending shaft clamping surface configured to abut an outer circumferentially extending surface portion of the rotary shaft, wherein the shaft clamping surface comprises a protrusion configured to engage a recess of the rotary shaft and/or wherein the shaft clamping surface comprises a recess configured to engage a protrusion of the rotary shaft, wherein the protrusion and the recess are jointly configured to, when engaging, counteract a relative movement between the fixture element and the rotary shaft along the first axial direction, and
an outwardly facing circumferentially extending opening abutment surface, wherein the opening abutment surface is configured to abut an inwardly facing surface portion surrounding the opening, along a portion of a circumference of the inwardly facing surface portion, wherein the opening abutment surface is inclined towards the shaft clamping surface as seen along the first axial direction, whereby the fixture element is forced radially inwards when being translated in the first axial direction while the opening abutment surface slidingly bears against the inwardly facing surface portion, thereby pressing the shaft clamping surface against the outer circumferentially extending surface portion of the rotary shaft.

Hereby an improved shaft fixture arrangement for releasably fixing a rotary shaft of an agitator system extending into a vessel through an opening in the vessel in a first axial direction is provided.

The shaft fixture arrangement is designed for and hence suitable for releasably fixing a rotary shaft of an agitator system extending into a vessel through an opening in the vessel in a first axial direction. Thus, the shaft fixture arrangement is designed for and hence suitable for releasably fixing a rotary shaft of an agitator system in relation to an opening of a vessel.

It should be noted that within the context of this application the term "circumferentially extending surface" or "circumferentially extending surface portion" may mean any surface or surface portion which to some extent extends along a circumference or a perimeter, such as along an external or internal surface of an object. The circumferentially extending surface or circumferentially extending surface portion may be an internal surface or an external surface or surface portion. The circumferentially extending surface or circumferentially extending surface portion may extend about a complete circumference or may extend partially about a circumference. The circumferentially extending surface or circumferentially extending surface portion may be a circular surface or a portion of circular surface portion. The circumferentially extending surface or circumferentially extending surface portion may have any shape as long as it extends along at least a portion of a circumference or perimeter of for instance an object or an opening.

It should be noted that within the context of this application the term "inwardly facing surface portion surrounding an opening" may mean any surface portion surrounding an opening, where the surface portion has an inwardly facing component. Thus, an inwardly facing surface portion surrounding an opening faces the opening to some extent, although such inwardly facing surface portion surrounding an opening may e.g. be a slandered or inclined surface portion. Thus, an inwardly facing surface portion surrounding an opening may be a portion of an inwardly facing bounding surface defining an opening. Further, an inwardly facing surface portion surrounding an opening may be a surface portion of a vessel or a surface portion of an element attached or fixed to a vessel, such as a housing, a flange or a pipe section to give a few non-limiting examples.

The present invention is based on the realization that a rotary shaft of an agitator system may be releasably fixed in relation to an opening of a vessel in a safe, time-efficient and clean manner by two or more fixture elements configured to jointly fix the rotary shaft rather than using a temporary fixture made of, for instance, planks.

By each each fixture element having an inwardly facing circumferentially extending shaft clamping surface configured to abut an outer circumferentially extending surface portion of the rotary shaft, the rotary shaft may be tightly clamped between the fixture elements of the fixture arrangement.

By the opening abutment surface being inclined towards the shaft clamping surface as seen along the first axial direction, the fixture elements may be firmly pressed against the rotary shaft by the fixture element being forced towards the rotary shaft while the opening abutment surface interacts with the opening by the opening abutment surface slidingly bearing against the inwardly facing surface portion circumscribing the opening.

By the shaft clamping surface of each fixture element having a protrusion configured to engage a recess of the rotary shaft and/or a recess configured to engage a protrusion of the rotary shaft, wherein the protrusion and the recess are jointly configured to, when engaging, counteract a relative movement between the fixture element and the rotary shaft along the first axial direction, the rotary shaft may be firmly fixed in any direction. Thus, the rotary shaft may be fixed in a way where it is capable of taking up significant lateral forces or cross forces without sliding at the interface with the fixture elements. In other words, the rotary shaft may be subjected to transverse loads and still be firmly held in position by the fixture elements since a relative movement between the fixture element and the rotary shaft along the first axial direction is counteracted by the above engagement. This property may be particularly significant when the rotary shaft is to be fixed in a non-vertical direction, such as in case of an inclined rotary shaft or in case of transporting a vessel in a lying position. At the same time the rotary shaft is counteracted from sliding along its length in relation to the fixture elements.

The recess and/or protrusion of each fixture element may have any suitable shape.

Each fixture element may comprise one or more protrusions configured to engage one or more recesses of the rotary shaft.

Each fixture element may comprise one or more recesses configured to engage one or more protrusions of the rotary shaft.

Each fixture element may comprise one or more protrusions and one or more recesses configured to engage one or more recesses and one or more protrusions of the rotary shaft.

Thus, a synergistic effect resulting in that the rotary shaft may be firmly fixed in any direction is achieved by the combination of the highly expedient features of the two or more fixture elements.

An extension of the shaft clamping surface along the first axial direction may lie in a range of 10mm to 100mm, such as 20mm to 50mm, which is advantageous in that the rotary shaft may be firmly fixed in any direction. This means among other things that the rotary shaft may take up significant lateral forces without being notably displaced or without sliding at its interface with the fixture elements. According to one example, the extension of the shaft clamping surface along the first axial direction may be 34 mm in case the rotary shaft has a diameter of 40 mm. In practice, the extension of the shaft clamping surface along the first axial direction will generally be longer with an increased diameter of the rotary shaft. Similarly, the extension of the shaft clamping surface along the first axial direction will generally be longer with an increased length of the rotary shaft.

An extension of the shaft clamping surface along the first axial direction may correspond to 50% to 200%, such as 100% to 150%, of a diameter of the rotary shaft, which is advantageous in that the rotary shaft may be firmly fixed in any direction. To this end, it may be noted that the rotary shaft may typically have a diameter in a range of 20-120 mm.

A circumferential extension of the shaft clamping surface may lie in a range of 20% to 40%, such as 20% to 30% or 25% to 35%, of a circumference of the outer circumferentially extending surface portion of the rotary shaft, which is advantageous in that the rotary shaft may be firmly fixed in any direction.

A circumferential extension of the shaft clamping surface may lie in a range of 20% to 30% of a circumference of the outer circumferentially extending surface portion of the rotary shaft, in case the shaft fixture arrangement has three fixture elements.

A circumferential extension of the shaft clamping surface may lie in a range of 25% to 35% of a circumference of the outer circumferentially extending surface portion of the rotary shaft, in case the shaft fixture arrangement has two fixture elements.

The opening abutment surface may be inclined towards the shaft clamping surface with an angle in a range of 5 degrees to 45 degrees, such as 10 degrees to 20 degrees, which is advantageous in that the shaft clamping surface may be firmly pressed against the outer circumferentially extending surface portion of the rotary shaft when the opening abutment surface slidingly bears against the inwardly facing surface portion.

The opening abutment surface may be inclined towards the shaft clamping surface with an angle of about 15 degrees.

The protrusion of the shaft clamping surface and/or the protrusion of the rotary shaft may comprise a circumferentially extended protrusion, such as a fin, which is advantageous in that the circumferentially extended protrusion may cooperate with a circumferentially extended recess, such as a groove. Thus, in case the shaft clamping surface comprises a circumferentially extended protrusion, the circumferentially extended protrusion may to advantage engage a groove extending along the complete circumference of the outer circumferentially extending surface portion of the rotary shaft. Further, in case the shaft clamping surface comprises a circumferentially extended protrusion extending along the complete extension of the shaft clamping surface, the circumferentially extended protrusion may to advantage engage a groove extending along the complete circumference of the outer circumferentially extending surface portion of the rotary shaft, such that the engagement may take place irrespective of the rotational orientation of the rotary shaft.

The recess of the shaft clamping surface and/or the recess of the rotary shaft may comprise a circumferentially extended recess, such as a groove, which is advantageous in that the circumferentially extended recess may cooperate with a circumferentially extended protrusion, such as a fin. Thus, in case the shaft clamping surface comprises a circumferentially extended recess, the circumferentially extended recess may to advantage engage a protrusion extending along the complete circumference of the outer circumferentially extending surface portion of the rotary shaft. Further, in case the shaft clamping surface comprises a circumferentially extended recess extending along the complete extension of the shaft clamping surface, the circumferentially extended recess may to advantage engage a protrusion extending along the complete circumference of the outer circumferentially extending surface portion of the rotary shaft, such that the engagement may take place irrespective of the rotational orientation of the rotary shaft.

The fixture element may further comprise a vessel abutment surface extending radially outwards in a plane perpendicular to the first axial direction, wherein the vessel abutment surface is configured to abut an outer surface portion associated with the vessel positioned radially outside of the opening and facing in a direction opposite to the first axial direction, which is advantageous in that the fixture element may be counteracted from being twisted or displaced along the extension of the rotary shaft. Thus, a more firm or rigid fixing of the rotary shaft may be achieved. In particular, a more firm or rigid fixing of the rotary shaft in any direction may be achieved.

The "vessel abutment surface" may be any surface configured to abut a surface associated with the vessel positioned radially outside of the opening and facing a direction opposite to the first axial direction. Thus, the vessel abutment surface may be any surface configured to abut a surface associated with the vessel positioned radially outside of the opening and having a component facing a direction opposite to the first axial direction. Hence, the vessel abutment surface may be configured to abut the vessel itself or may be configured to abut for example a flange mounted or fixed at the opening of the vessel. Moreover, the vessel abutment surface may be configured to abut a duct section or pipe section mounted or fixed at the opening of the vessel.

The fixture element may further comprise a fastening opening extending along the first axial direction, the fastening opening being configured to receive a releasable fastening member, such as a screw, for releasably fastening the fixture element to an outer surface portion associated with the vessel positioned radially outside of the opening and facing in a direction opposite to the first axial direction, which is advantageous in that the fixture element may be fixed in an secure manner to the vessel.

The fastening opening may be formed by a sleeve member supported by a pair of resilient legs, which is advantageous in that the resilient legs may flex while taking up forces. In this way, a releasable fastening member, such as a screw, received in the sleeve member may be at least partially relieved from being subjected to extensive forces. Put differently, a releasable fastening member received in the sleeve member may to some extent be protected from receiving forces that the fixture element is subject to from the rotary shaft.

The fixture element may be integrally formed, which is advantageous in that a strong fixture element with no loose parts may be formed. Hence, the risk of misplacing or losing otherwise loose parts may be eliminated.

The fixture element may be formed by being machined from a metal material, such as aluminum, an alloy steel or a stainless steel, which is advantageous in that a strong and sturdy fixture element may be formed.

The fixture element may be formed of a set of sub elements, which is advantageous in that a fixture element with a highly tailored properties may be formed. Further, by the fixture element being formed of set of sub elements, variations, irregularities or undesired tolerances of the opening, and hence of the inwardly facing surface portion surrounding the opening, may be accounted for. For instance, the sub elements of the set of sub elements may move in relation to each other so as to firmly abut the inwardly facing surface portion surrounding the opening.

The set of sub elements may comprise any number of sub elements, such as 2, 3, 4, 5, 6 or 10 to give a few non limiting examples. In case the fixture element is formed of a set of sub elements, it is important that at least the sub element or sub elements comprising the shaft clamping surface and the opening abutment surface is/are forced radially inwards when being translated in the first axial direction while the opening abutment surface slidingly bears against the inwardly facing surface portion. In this way, the shaft clamping surface will be pressed against the outer circumferentially extending surface portion of the rotary shaft. In other words, sub elements relevant for the actual fixing of the rotary shaft are to fix the rotary shaft as have been described above.

The fixture element may comprise a first sub element and a second sub element, wherein the first sub element comprises the shaft clamping surface and the opening abutment surface, whereby at least the first sub element is forced radially inwards when being translated in the first axial direction while the opening abutment surface slidingly bears against the inwardly facing surface portion, thereby pressing the shaft clamping surface against the outer circumferentially extending surface portion of the rotary shaft, which is advantageous in that the first sub element may interact with the rotary shaft and the opening whereas the second sub-element may serve a different purpose, such as fixing the first sub element in relation to the opening. Further, by the fixture element comprising a first sub element and a second sub element, the interaction between the first sub element and the second sub element may be tailored such that the overall performance and flexibility of the fixture element may be improved. Furthermore, by the fixture element comprising a first sub element and a second sub element variations of the opening and hence the inwardly facing surface portion surrounding the opening may be compensated by the varying the relative position between the first sub element and the second sub element. In practice, the relative position between the first sub element and the second sub element may be self-adjusting and governed by the force transfer or force translation between the between the first sub element and the second sub element.

The first sub element may comprises an inclined outwardly facing first sub element interaction surface, wherein the first sub element interaction surface is inclined away from the shaft clamping surface as seen along the first axial direction, and wherein the second sub element may comprise an inclined inwardly facing second sub element interaction surface, wherein the second sub element interaction surface is inclined away from shaft clamping surface as seen along the first axial direction, whereby the first sub element is forced radially inwards and in the first axial direction when the second sub element is translated in the first axial direction while the second sub element interaction surface slidingly bears against the first sub element interaction surface, which is advantageous in that the interaction between the first sub element and the second sub element may assist in firmly fixing the rotary shaft in relation to the opening. More specifically, by the first sub element being forced radially inwards and in the first axial direction when the second sub element is translated in the first axial direction while the second sub element interaction surface slidingly bears against the first sub element interaction surface, a force along the first axial direction acting on the second sub element may be translated or at least partially translated into a force acting radially inwards on the first sub element.

The first sub element interaction surface may be inclined away from the shaft clamping surface with an angle in a range of 5 degrees to 45 degrees, such as 10 degrees to 20 degrees.

The second sub element interaction surface may be inclined away from the shaft clamping surface with an angle in a range of 5 degrees to 45 degrees, such as 10 degrees to 20 degrees.

The first sub element interaction surface and the second sub element interaction surface may have the same degree of inclination or the same angle, which is advantageous in that the first sub element interaction surface and the second sub element interaction surface may interact with each other over significant surface portions thereof. In this way, a sturdy interaction between the first sub element and the second sub element may be realized. Further, In this way, the wear of the first sub element and the second sub element may be reduced.

The second sub element may comprise the vessel abutment surface.

The fixture element may further comprise a taper washer configured to receive the releasable fastening member, wherein the fastening opening may be provided in the second sub element and may be at least partially surrounded by an inclined outwardly facing taper washer interaction surface, wherein the taper washer interaction surface is inclined away from the shaft clamping surface as seen along the first axial direction, whereby the second sub element may be forced radially inwards when the taper washer slidingly bears against the taper washer interaction surface, when being translated in the first axial direction, which is advantageous in that the interaction between the second sub element and the taper washer may assist in firmly fixing the rotary shaft in relation to the opening. More specifically, by the second sub element being forced radially inwards when the taper washer is translated in the first axial direction while the taper washer slidingly bears against the taper washer interaction surface, when being translated in the first axial direction, a force along the first axial direction acting on the taper washer may be translated or at least partially translated into a force acting radially inwards on the second sub element.

The "taper washer" may be any type of generally wedge shaped washer. Thus, the taper washer may be any type of generally wedge shaped element which may receive a fastening member, such as a screw, through an opening or a slot such that the fastening member may interact with and hence push on the taper washer.

The taper washer interaction surface may be inclined away from the shaft clamping surface with an angle in a range of 30 degrees to 60 degrees, such as 40 degrees to 50 degrees.

The taper washer may comprise an inclined surface being inclined at an angle in a range of 30 degrees to 60 degrees, such as 40 degrees to 50 degrees.

The taper washer interaction surface and the taper washer may have the same degree of inclination, which is advantageous in that the taper washer interaction surface and the taper washer may interact with each other over significant surface portions thereof. In this way, a sturdy interaction between the taper washer and the second sub element may be realized. Further, In this way, the wear of the taper washer and the second sub element may be reduced.

The shaft fixture arrangement may comprise three or more fixture elements, which is advantageous in that the shaft fixture arrangement may fix the rotary shaft in relation to the opening in a firm and rigid manner. The three or more fixture elements may thus jointly fix the rotary shaft in relation to the opening in a firm manner where the rotary shaft is firmly fixed in any direction.

The shaft fixture arrangement may consist of three or more fixture elements.

According to another aspect of the invention, there is provided a system for releasably fixing a rotary shaft of an agitator system extending into a vessel through an opening in the vessel in a first axial direction, the system comprising:
a shaft fixture arrangement according to the first aspect,
the rotary shaft, and
the vessel.

In general, features of this aspect provide similar advantages as discussed above in relation to the first aspect. Consequently, said advantages will not be repeated in order to avoid undue repetition.

According to another aspect of the invention, there is provided a method of releasably fixing a rotary shaft of an agitator system extending into a vessel through an opening in the vessel in a first axial direction, using a shaft fixture arrangement according to the first aspect, the method comprising:
positioning the two or more fixture elements circumferentially distributed around a circumference of the rotary shaft, such that the shaft clamping surface of each fixture element abuts a respective outer circumferentially extending surface portion of the rotary shaft, and
translating the two or more fixture elements in the first radial direction while the opening abutment surface of each fixture element slidingly bears against a respective inwardly facing surface portion surrounding the opening, along a portion of a circumference of the inwardly facing surface portion, such that each fixture element is forced radially inwards while its associated shaft clamping surface is pressed against the associated outer circumferentially extending surface portion of the rotary shaft, thereby fixing the rotary shaft in relation to the opening by the two or more fixture elements jointly clamping the rotary shaft therebetween.

In general, features of this aspect provide similar advantages as discussed above in relation to the first aspect. Consequently, said advantages will not be repeated in order to avoid undue repetition.

The positioning of the two or more fixture elements circumferentially distributed around a circumference of the rotary shaft may further comprise engaging a protrusion of the shaft clamping surface with a recess of the rotary shaft, which is advantageous in that the protrusion and the recess may jointly, when engaging, counteract a relative movement between the fixture element and the rotary shaft along the first axial direction.

The positioning of the two or more fixture elements circumferentially distributed around a circumference of the rotary shaft may further comprise engaging a recess of the shaft clamping surface with a protrusion of the rotary shaft, which is advantageous in that the protrusion and the recess may jointly, when engaging, counteract a relative movement between the fixture element and the rotary shaft along the first axial direction.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Fig. 1A is a schematic partial cross-sectional view of mixing arrangement having a top mounted agitator system attached to a vessel.
Fig. 1B is a schematic partial cross-sectional view of mixing arrangement having a side mounted agitator system attached to a vessel.
Fig. 2 is a perspective detailed view of a rotary shaft of an agitator extending into a vessel through an opening in a vessel while being releasably fixed by a shaft fixture arrangement comprising three fixture elements.
Fig. 3 is a perspective view of the shaft fixture arrangement of Fig. 2.
Fig. 4A is a perspective detailed view of a variant of a shaft clamping surface.
Fig. 4B is a perspective detailed view of another variant of a shaft clamping surface.
Fig. 4C is a perspective detailed view of yet another variant of a shaft clamping surface.
Fig. 5 is a cross-sectional view illustrating how the fixture elements of Figs. 2 and 3 interact with a rotary shaft and an inwardly facing surface portion surrounding an opening in a vessel.
Fig. 6A is a cross-sectional view illustrating how a shaft fixture arrangement having two fixture elements interact with a rotary shaft and an inwardly facing surface portion surrounding an opening in a vessel.
Fig. 6B is a perspective view illustrating how the shaft fixture arrangement of Fig. 6A interacts with the rotary shaft and an inwardly facing surface portion surrounding an opening in a vessel.
Fig. 7A is a perspective view illustrating a shaft fixture arrangement comprising three fixture elements where of an alternative design.
Fig. 7B is a perspective cross-sectional view illustrating how the fixture elements of Figs. 7A interact with a rotary shaft and an inwardly facing surface portion surrounding an opening in a vessel.
Fig. 8 is a flow chart of a method of releasably fixing a rotary shaft of an agitator system extending into a vessel through an opening in the vessel in a first axial direction, using a shaft fixture arrangement.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

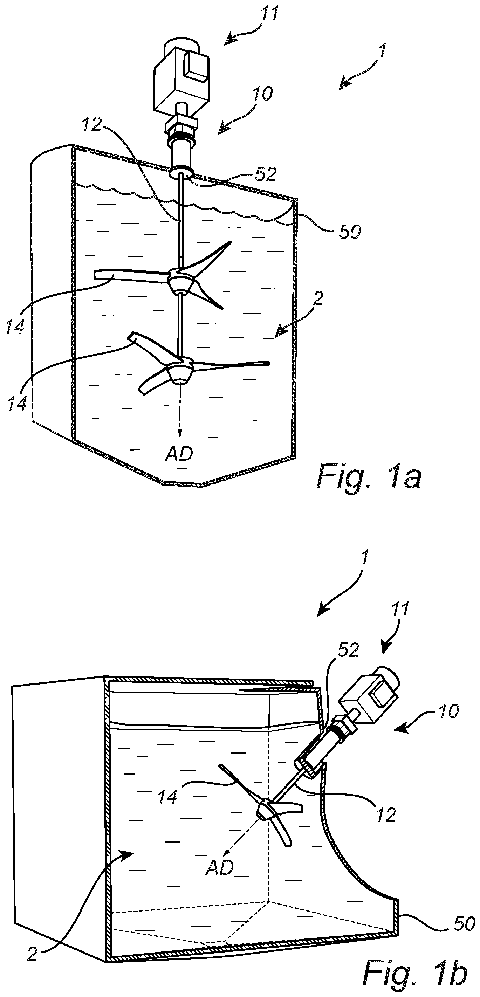

Initially two set-ups of mixing arrangements 1 will be briefly described with reference to Figs. 1A and 1B. Each mixing arrangement 1 comprises an agitator system 10 and a vessel 50.

Agitator systems 10 is, as known in the art, used to mix, agitate or blend a product 2 or similar held in the vessel 50. Thus, the function of the mixing arrangement 1 and its agitator system 10 will not be described in detail hereinafter. Each agitator system 10 has a rotary shaft 12 which extends into its associated vessel 50, such as a stainless tank or similar, through an opening 52 in the vessel 50. Each rotary shaft 12 extends into its associated vessel 50 in a first axial direction AD.

The rotary shaft 12 of the agitator system 10 of Fig. 1A is provided with two impellers 14 configured to agitate, mix or blend a product 2 held in the vessel 50.

The rotary shaft 12 of the agitator system 10 of Fig. 1B is provided with one impeller 14 configured to agitate, mix or blend a product 2 held in the vessel 50.

Each agitator system 10 has a drive unit 11 including an electrical motor that transmits the energy required for agitating, mixing, and blending the product 2, either directly or via a gearbox, to the rotary shaft 12 shaft. As the rotary shaft 12 rotates, the impellers 14 are turned. The impeller movement typically creates a high flow of the product 2 with low shear due to a highly effective axial pumping effect on the product 2 in the vessel 50. This results in effective agitating, mixing or blending of the entire contents, i.e. the product 2 of the vessel 50.

The agitator system 10 of Fig. 1A is similar to the agitator system 10 of Fig. 1B. However, the agitator system 10 of Fig. 1A is top-mounted, whereas the agitator system 10 of Fig. 1B is side-mounted. This mean that the first axial direction AD in which the rotary shaft 12 of the agitator system 10 of Fig. 1A extends into the vessel is vertical (downwards), whereas the first axial direction AD in which the rotary shaft 12 of the agitator system 10 of Fig. 1B extends into the vessel is oblique (downwards).

During e.g. fabrication of the vessel 50 and service of the agitator system 10, the rotary shaft 12 may have to be releasably fixed in relation to the vessel 50. During such fixing of the rotary shaft 12, the rotary shaft 12 of Fig. 1A will in principle not be subjected to any lateral forces since the first axial direction AD coincides with the field of gravity. However, in the side mounted agitator system 10 of Fig. 1B, the rotary shaft 12 will be subjected to lateral forces mainly owing to the fact that the first axial direction AD in Fig. 1B does not coincide with the field of gravity. Thus, especially in the agitator system 10 of Fig. 1B, it is highly important to be able to fix the rotary shaft 12 firmly in any direction during e.g. fabrication of the vessel 50 and service of the agitator system 10, or else there is an outspoken risk that the rotary shaft 12 will sag in relation to the vessel 50, potentially with troublesome consequences. It is to be understood that the same holds true if the vessel 50 is Fig. 1A is tilted or laid down.

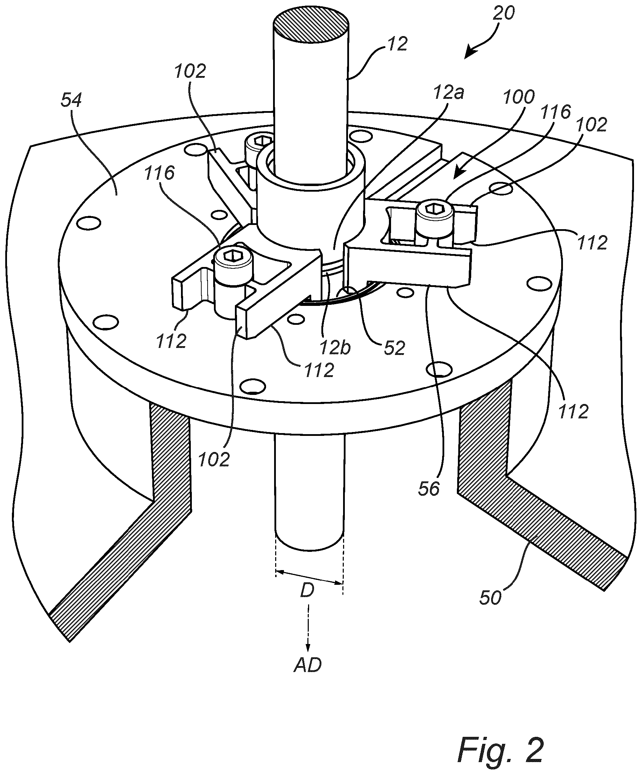

Now turning to Fig. 2. Fig. 2 illustrates how the rotary shaft 12 of an agitator system 10, like the agitator system 10 of Fig. 1B or Fig. 1B, extends into a vessel 50 through an opening 52 in the vessel 50 in a first axial direction AD. The rotary shaft 12 is releasably fixed by means of a shaft fixture arrangement 100. Thus, the rotary shaft 12 is releasably fixed in relation to the vessel 50 by means of a shaft fixture arrangement 100. More specifically, the rotary shaft 12 is releasably fixed in relation to the opening 52 of the vessel 50 by means of a shaft fixture arrangement 100.

As illustrated in Fig. 2, the depicted fixture arrangement 100 comprises three fixture elements 102. In this regard, it is to be noted that the fixture arrangement 100 may comprise two or more fixture elements 102, such as two, three, four, five or even ten fixture elements 102. The fixture elements 102 are jointly fixing the rotary shaft 12 in relation to the opening 52 by engaging the rotary shaft 12 such that the rotary 12 shaft is clamped between the fixture elements 102.

As illustrated in Fig. 2, the opening 52 of the vessel 50 is defined by a flange 54 which is attached to the vessel 50. The depicted flange 54 is welded to the vessel 50. However, the flange 54 may for instance be bolted or riveted to the vessel 50. Further, the opening 52 may be directly defined by the material making up the vessel 50. Further, the opening 52 may be defined by another object, such as a pipe or duct, connect to the vessel 50.

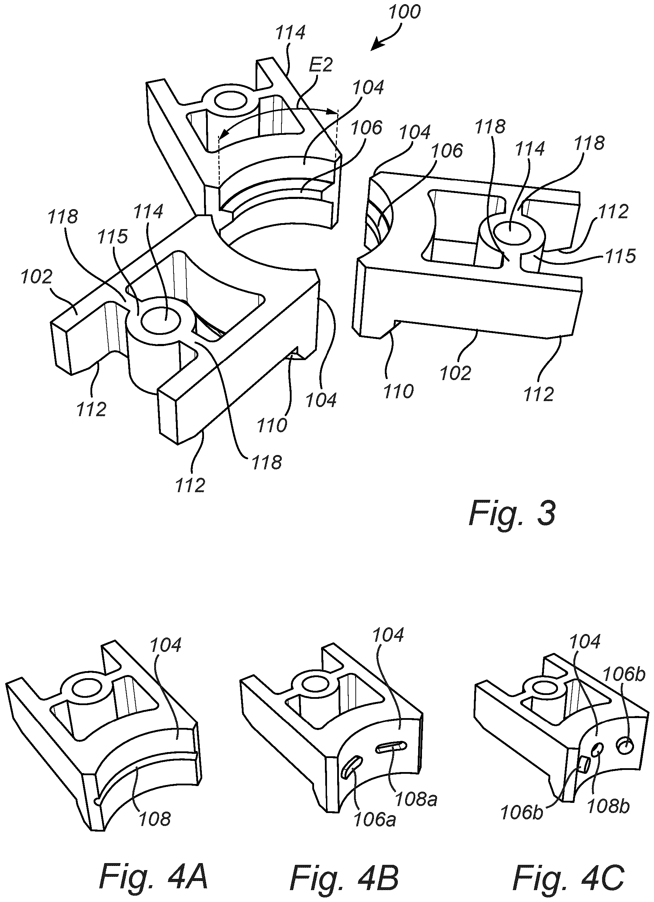

Now also turning to Fig. 3. Fig. 3 illustrates the fixing arrangement 100 of Fig. 2 in greater detail. In Fig. 3, the three fixture elements 102 are positioned like in Fig. 2, meaning that different parts or portions of the different fixture elements 102 are visible in Fig. 3. The three fixture elements 102 of Figs. 2 and 3 have a same design. However, it is to be noted that the fixture elements 102 of the shaft fixture arrangement 100 may have different designs.

As best illustrated in Fig. 3, each fixture element 102 has an inwardly facing circumferentially extending shaft clamping surface 104. The shaft clamping surface 104 is configured to abut an outer circumferentially extending surface portion 12a of the rotary shaft 12, as best illustrated in Fig. 2. Thus, the shaft clamping surface 104 of each fixture element 102 abuts the outer circumferentially extending surface portion 12a of the rotary shaft 12 when the fixture elements 102 jointly fix the rotary shaft 12 in relation to the opening 52 by jointly clamping the rotary shaft 12.

As best illustrated in Fig. 3, each depicted fixture element 102 has at its shaft clamping surface 104 a protrusion 106. The protrusion 106 is formed as a circumferentially extending protrusion 106. In other words, the protrusion 106 may be a fin which protrudes from the shaft clamping surface 104. Further, the protrusion 106 extends circumferentially across the entire shaft clamping surface 104.

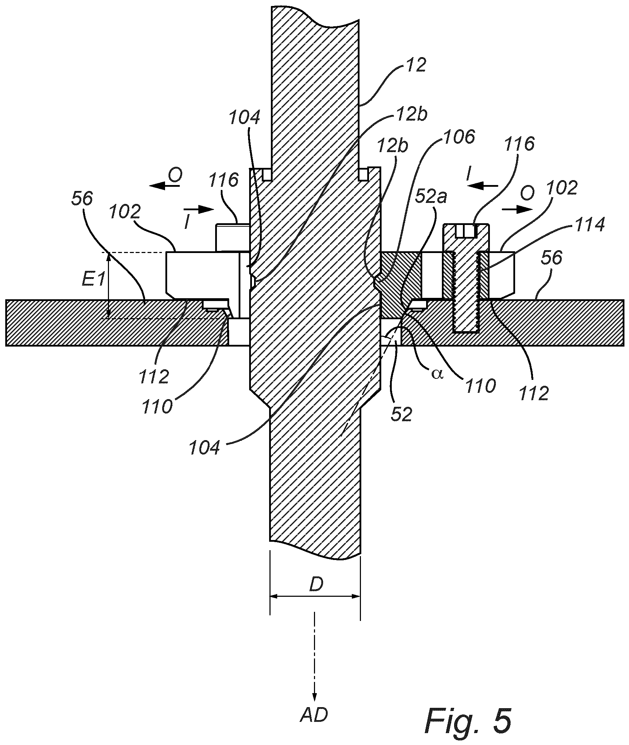

The protrusion 106 is configured to engage a recess 12b of the rotary shaft 12. As best illustrated in Fig. 2, the recess 12b of the rotary may be formed as a circumferentially extending groove 12b. Such circumferentially extending groove 12b may like in Fig. 2 circumscribe the circumferentially extending surface portion 12a of the rotary shaft 12. Thus, the recess 12b of the rotary shaft 12 may be a grove which extends about the outer perimeter of the rotary shaft 12. As illustrated in Figs. 2 and 5, the rotary shaft 12 may have an increased diameter at the location of the recess 12b in order to not weaken the rotary shaft by the provision of the recess 12b.

The protrusion 106 and the recess 12b are jointly configured to, when engaging, counteract a relative movement between the fixture element 120 and the rotary shaft 12 along the first axial direction AD.

Now turning also to Fig. 4A. Fig. 4A illustrates an alternative design of the shaft clamping surface 104. As illustrated in Fig. 4A, each fixture element 102 may have at its shaft clamping surface 104 a recess 108. The recess 108 of Fig. 4A is formed as a circumferentially extending recess 108. In other words, the recess 108 may be a groove in the shaft clamping surface 104. Further, the protrusion 106 extends circumferentially across the entire shaft clamping surface 104.

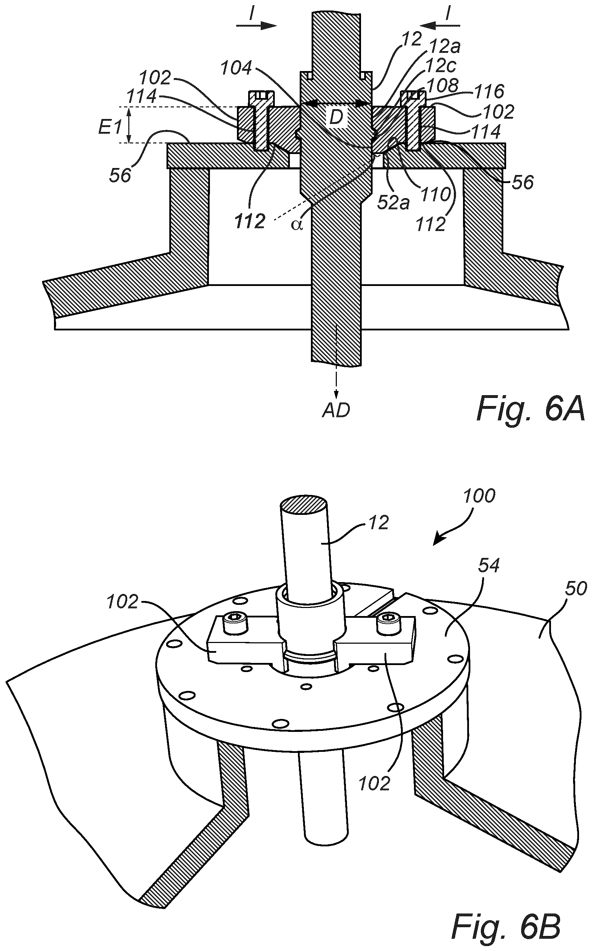

The recess 108 is configured to engage a protrusion 12c of the rotary shaft 12. An example of such protrusion 12c is illustrated in Fig 6A. As illustrated in Fig. 6A, the protrusion 12c of the rotary may be formed as a circumferentially extending protrusion 12c. Such circumferentially extending protrusion 12c may circumscribe the circumferentially extending surface portion 12a of the rotary shaft 12. Thus, the protrusion 12c of the rotary shaft 12 may be a fin which extends about the outer perimeter of the rotary shaft 12.

The protrusion 12c and the recess 108 are jointly configured to, when engaging, counteract a relative movement between the fixture element 102 and the rotary shaft 12 along the first axial direction AD.

Now turning also to Fig. 4B. Fig. 4B illustrates an alternative design of the shaft clamping surface 104. As illustrated in Fig. 4B, each fixture element 102 may have at its shaft clamping surface 104 a protrusion 106a and a recess 108a. The protrusion 106a of Fig. 4B is formed as a circumferentially extending protrusion 106a which extends circumferentially along a portion of the shaft clamping surface 104. The recess 108a of Fig. 4B is formed as a circumferentially extending recess 108a which extends circumferentially along a portion of the shaft clamping surface 104.

In case the rotary shaft 12 is provided with a complementary set of recesses and protrusions, the protrusions and recess will not only, when engaging, counteract a relative movement between the fixture element 102 and the rotary shaft 12 along the first axial direction AD, but will also counteract a rotation of the rotary shaft 12. However, the protrusion 106a and a recess 108a still enables that the shaft clamping surface 104 abuts an outer circumferentially extending surface portion 12a of the rotary shaft 12 provided with a recess 12b in from of a grove which extends about the outer perimeter of the rotary shaft 12. In such case, a relative movement between the fixture element 102 and the rotary shaft 12 along the first axial direction AD will still be counteracted.

Now turning also to Fig. 4C. Fig. 4C illustrates an alternative design of the shaft clamping surface 104. As illustrated in Fig. 4C, each fixture element 102 may have at its shaft clamping surface 104 two protrusions 106b and a recess 108b. The protrusions 106a of Fig. 4C is formed as circular protrusion 106a. The recess 108a of Fig. 4C is formed as a circular recess 108a.

In case the rotary shaft 12 is provided with a complementary set of recesses and protrusions, the protrusions and recess will not only, when engaging, counteract a relative movement between the fixture element 102 and the rotary shaft 12 along the first axial direction AD, but will also counteract a rotation of the rotary shaft 12. However, the protrusions 106b and a recess 108b still enables that the shaft clamping surface 104 abuts an outer circumferentially extending surface portion 12a of the rotary shaft 12 provided with a recess 12b in from of a grove which extends about the outer perimeter of the rotary shaft 12. In such a case, a relative movement between the fixture element 102 and the rotary shaft 12 along the first axial direction AD will still be counteracted.

Now turning to Figs. 2, 3 and 5. Fig. 5 illustrates in cross section how the fixture elements 102 of Figs. 2 and 3 jointly fix the rotary shaft 12 in relation to the opening 52 in the vessel 50 by engaging the rotary shaft 12 such that the rotary shaft 12 is clamped between the fixture elements 102.

As best illustrated in Fig. 5, each fixture element 102 has an outwardly facing circumferentially extending opening abutment surface 110. The opening abutment surface 110 is configured to abut an inwardly facing surface portion 52a surrounding the opening 52. More specifically, the opening abutment surface 110 of each fixture element 102 is configured to abut the inwardly facing surface portion 52a surrounding the opening 52 along a portion of a circumference of the inwardly facing surface portion 52a.

As best illustrated in Fig. 5, the opening abutment surface 110 is inclined towards the shaft clamping surface 104 as seen along the first axial direction AD. Thus, as illustrated in Fig. 5, generally speaking, a wedge is formed by the material of the fixture element 102 which is located between the opening abutment surface 110 and the shaft clamping surface 104. This means that the fixture element 102 is forced radially inwards I when being translated in the first axial direction AD while the opening abutment surface 110 slidingly bears against the inwardly facing surface portion 52a. This has the effect that the shaft clamping surface 104 is pressed against the outer circumferentially extending surface portion 12a of the rotary shaft 12. Thus, the rotary shaft 12 may be firmly clamped between the fixture elements 102 in any direction by the synergistic interplay between the shaft clamping surface 104 and the opening abutment surface 110.

The opening abutment surface 110 may according to variants be inclined towards the shaft clamping surface 104 as seen along the first axial direction AD with different angels α. The present inventors have found that the opening abutment surface 110 may be to advantage be inclined towards the shaft clamping surface 104 with an angle α in a range of 5 degrees to 45 degrees. It is currently believed that an optimal pressing of the shaft clamping surface 104 against the outer circumferentially extending surface portion 12a of the rotary shaft 12, may be achieved when the opening abutment surface 110 is inclined towards the shaft clamping surface 104 with an angle α in a range of 10 degrees to 20 degrees.

As is understood, the degree by which the fixture element 102 is forced radially inwards when being translated in the first axial direction AD while the opening abutment surface 110 slidingly bears against the inwardly facing surface portion 52a, is determined by the angle α. A smaller angle α results in that the fixture element 102 is forced less radially inwards when being translated in the first axial direction AD while the opening abutment surface 110 slidingly bears against the inwardly facing surface portion 52a, as compared to a larger angle α. In this way, the pressing force excreted on the rotary shaft 12 may be controlled in practice by tailoring the angle α. As illustrated in Fig. 5, the angle α may be about 20 degrees. As illustrated in Fig. 6A, the angle α may be about 40 degrees.

As illustrated in Figs. 5 and 6A, the inwardly facing surface portion 52a may to advantage be inclined correspondingly to the opening abutment surface 110. In this way, the contact surface between the inwardly facing surface portion 52a and the opening abutment surface 110 may be increased. Such increased contact surface may result in more firm fixing of the rotary shaft 12 in relation to the opening 52.

The extension E1 of the shaft clamping surface 104 along the first axial direction AD may be varied in order to tailor the fixing properties of the shaft fixture arrangement 100. Thus, by tailoring the extension E1 of the interface between the shaft clamping surface 104 and the outer circumferentially extending surface portion 12a of the rotary shaft 12 along the first axial direction AD the fixing properties of the shaft fixture arrangement 100 may be tailored. The ability of the shaft fixture arrangement 100 to take up forces in a transverse direction to the first axial direction AD may be increased by increasing the extension E1. The extension E1 of the shaft clamping surface 104 along the first axial direction AD may lie in a range of 10mm to 100mm. It is currently believed that the extension E1 shall lie in a range of 20mm to 50mm for the most common diameters of the rotary shaft 12 for a state-of-the-art agitator system 1. According to one example, the extension E1 of the shaft clamping surface 104 along the first axial direction AD may be 34 mm in case the rotary shaft has a diameter of 40 mm.

The present inventors has found that a good balance between a firm fixing and the space typically available for the fixture elements 104 is achieved when the extension E1 of the shaft clamping surface along the first axial direction corresponds to 50% to 200% of the diameter D of the rotary shaft 12 at hand. It is currently believed that when the extension E1 of the shaft clamping surface along the first axial direction corresponds to 100% to 150% of the diameter D of the rotary shaft 12 at hand an optimal balance between a firm fixing and the space typically available for the fixture elements 104 may be achieved. To this end, it may be noted that the rotary shaft 12 may typically have a diameter D in a range of 20-120 mm for a state-of-the-art agitator system 1.

The present inventors have found that a circumferential extension E2, as illustrated in Fig. 3, of the shaft clamping surface 104 to advantage may lie in a range of 20% to 40% of a circumference of the outer circumferentially extending surface portion 12a of the rotary shaft 12b. This range offers a good balance between a firm fixing of the rotary shaft and the space available for other components, such as a bearing housing or drive unit of the agitator system 1. It is currently believed that a range of 20% to 30% is optimal in case the shaft fixture arrangement 100 has three fixture elements 102. It is currently believed that a range of 25% to 35% is optimal in case the shaft fixture arrangement 100 has two fixture elements 102. An example of such a shaft fixture arrangement 100 having two fixture elements 102 will be described further down while referring to Figs. 6A and 6B.

As illustrated in Figs. 2, 3, and 6A, the fixture element 102 may have a vessel abutment surface 112 which extends radially outwards O in a plane perpendicular to the first axial direction AD. Such vessel abutment surface 112 may thus be configured to abut an outer surface portion 56 associated with the vessel 50 positioned radially outside O of the opening 52 and facing in a direction opposite to the first axial direction AD. Thus, as illustrated in Fig. 2, such vessel abutment surface 112 may for example be configured to abut a surface portion 56 of the flange 54. Also, as illustrated in Fig. 2 such vessel abutment surface 112 may be formed by a set of surface portions provided at different portions of the fixture element 102. By, the vessel abutment surface 112 abutting a surface portion 56 associated with the vessel 50 positioned radially outside O of the opening 52 the fixture element 102 may be stabilized in relation to the opening 52 in the vessel 50, meaning that the rotary shaft 12 may be even more firmly fixed in relation to the opening 52.

As illustrated in Figs. 2, 3, and 6A, the fixture element 102 may comprise a fastening opening 114 extending along the first axial direction AD. Such fastening opening 114 may thus be configured to receive a releasable fastening member 116, such as a screw, for releasably fastening the fixture element 102 to an outer surface portion 56 associated with the vessel 50 positioned radially outside O of the opening 52 and facing in a direction opposite to the first axial direction AD.

As best illustrated in Fig. 2, the fastening opening 114 may be formed by a sleeve member 115. The sleeve member may be supported by a pair of resilient legs 118. In this way, the resilient legs 118 may flex and relieve a fastening member 116 received in the sleeve member 115 from being subject to excessive bending forces.

Now turning specifically to Figs. 6A and 6B. Figs. 6A and 6B illustrates a shaft fixture arrangement 100 having two fixture elements 102. The shaft fixture arrangement 100 of Figs. 6A and 6B is similar to the shaft fixture arrangement 100 of Figs. 2, 3 and 5. Given this, only relevant differences, not already described, will be described in the following.

The most significant difference between the shaft fixture arrangement 100 of Figs. 6A and 6B and the shaft fixture arrangement 100 of Figs. 2, 3 and 5 is that the fixture elements 102 of the shaft fixture arrangement 100 of Figs. 6A and 6B extends along a greater portion of the circumference of the outer circumferentially extending surface portion 12a the rotary shaft 12. This is in order to still achieve a firm fixing of the rotary shaft 12 in relation to the opening 52.

Further, the vessel abutment surface 112 has a shorter extension along the surface portion 56 associated with the vessel 50 positioned radially outside O of the opening 52. In this way a more compact shaft fixture arrangement 100 may be realized.

The above-described shaft fixture elements 102 of the shaft fixture arrangement 100 of Figs. 2, 3 and 5 and of the shaft fixture arrangement 100 of Figs. 6A and 6B may typically be integrally formed. However, the shaft fixture elements 102 may be formed by attaching a set of individual components so as to form the shaft fixture elements 102.

Further, above-described shaft fixture elements 102 of the shaft fixture arrangement 100 of Figs. 2, 3 and 5 and of the shaft fixture arrangement 100 of Figs. 6A and 6B may typically be formed by being machined from a metal material, such as aluminum, an alloy steel or a stainless steel. However, the shaft fixture elements 102 may for instance be machined or molded from other materials, such as plastic materials or fiber reinforced polymer materials.

The shaft fixture arrangement 100 of Figs. 2, 3 and 5, like the shaft fixture arrangement 100 of Figs. 6A and 6B, may, as illustrated in Fig. 2, form a system 20 for releasably fixing a rotary shaft 12 of an agitator system 1 extending into a vessel 50 through an opening 52 in the vessel in a first axial direction AD, when combined with the rotary shaft 12 and the vessel 50.

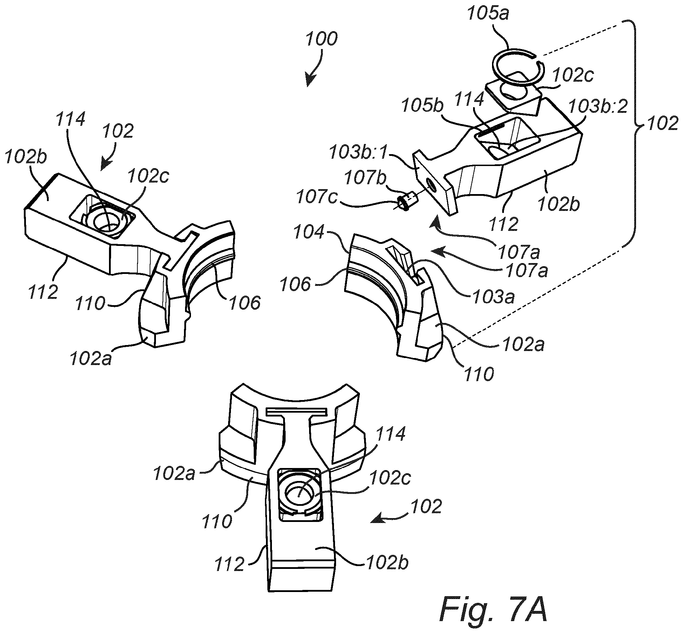

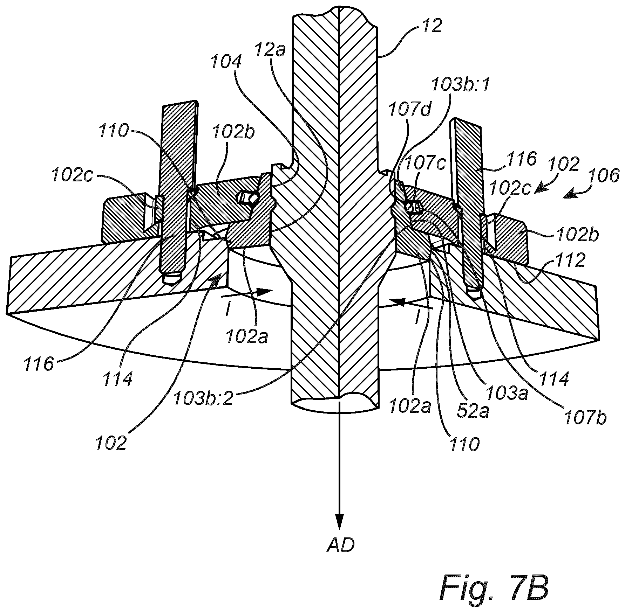

Now turning specifically to Figs. 7A and 7B. Figs. 7A and 7B illustrates a shaft fixture arrangement 100 having three fixture elements 102. The shaft fixture arrangement 100 of Figs. 7A and 7B is similar to the shaft fixture arrangement 100 of Figs. 2, 3 and 5. Given this, mainly relevant differences will be described in the following.

As illustrated in Figs. 7A and 7B, each depicted fixture element 102 comprises a first sub element 102a and a second sub element 102b. Further, each depicted fixture element 102 comprises a taper washer 102c. Hence, each depicted fixture element 102 is formed of a set of sub elements 102a-c. The first sub element 102a, the second sub element 102b and the taper washer 103c, i.e. the sub elements 102a-c, are configured to cooperate and to jointly act as a fixture element 102.

Further, as illustrated in Figs. 7A and 7B, the first sub element 102a comprises the shaft clamping surface 104 and the opening abutment surface 110. The fixture element 102 (formed of the sub elements 102a-c) is designed such that first sub element 102a is forced radially inwards I when being translated in the first axial direction AD while the opening abutment surface 110 slidingly bears against the inwardly facing surface portion 52a. In this way, the shaft clamping surface 104 is pressed against the outer circumferentially extending surface portion 12a of the rotary shaft 12 as have been described above in conjunction with Figs. 2, 3 and 5.

The depicted first sub element 102a comprises an inclined outwardly facing first sub element interaction surface 103a. The first sub element interaction surface 103a of the depicted fixture element 102 of Figs. 7A and 7B is inclined away from the shaft clamping surface 104 as seen along the first axial direction AD. The first sub element interaction surface 103a is configured to cooperate with the second sub element 102b of the fixture element 102.

To this end, the second sub element 102b of the depicted fixture element 102 of Figs. 7A and 7B comprises an inclined inwardly facing second sub element interaction surface 103b:1. The second sub element interaction surface 130b:1 is inclined away from shaft clamping surface 104 as seen along the first axial direction AD.

By the above provision of the first sub element interaction surface 103a and the second sub element interaction surface 130b:1, the first sub element 102a is forced radially inwards I and in the first axial direction AD when the second sub element 102b is translated in the first axial direction AD while the second sub element interaction surface 130b:1 slidingly bears against the first sub element interaction surface 103a. Thus, a force acting on the second sub element 102b along the first axial direction AD will be translated to the first sub element 102a and result in that the first sub element 102a is forced radially inwards I and in the first axial direction AD, which results in that the shaft clamping surface 104 is pressed against the outer circumferentially extending surface portion 12a of the rotary shaft 12.

Further, as best illustrated in Fig. 7B, the taper washer 102c, or sub element 102c, is configured to receive the releasable fastening member 116, e.g. the screw 116, as have been described above. More specifically, the taper washer 103c comprises an opening through which the fastening member 116 may extend. To this end, the releasable fastening member 116 is configured to push the taper washer 103c along the first axial direction AD, i.e. downwards in Fig. 7B. Thus, the screw 116 is configured to push the taper washer 103c along the first axial direction AD, i.e. downwards in Fig. 7B, in response to being tightened.

Further, as illustrated in Figs. 7A and 7B, the second sub element 102b comprises a fastening opening 114. In other words, a fastening opening 114 of the above described type is provided in the second sub element 102b. The fastening opening 114 of the second sub element 102b is surrounded by an inclined outwardly facing taper washer interaction surface 103b:2. The taper washer interaction surface 103b:2 is inclined away from the shaft clamping surface 104 as seen along the first axial direction AD. The fastening opening 114 of the depicted second sub element 102b is of a greater diameter than the releasable fasting member 116. This results in that the second sub element 102b may be translated inwards I when the second sub element 102b is forced radially inwards I while the taper washer 102c slidingly bears against the taper washer interaction surface 103b:2, when being translated in the first axial direction AD.

By the above provision of the taper washer interaction surface 103b:2 in combination with the taper washer 103c, the second sub element 102b is forced radially inwards I while the taper washer 102c slidingly bears against the taper washer interaction surface 103b:2, when being translated in the first axial direction AD. Thus, a force acting on the taper washer 103c along the first axial direction AD will be translated to the second sub element 102a and result in that the second sub element 102b is forced radially inwards I. This means in turn that the second sub element 102b will interact with the first sub element 102a as have been described above.

Given the above, by tightening the releasable fastening member 116, i.e. the screw 116, the shaft clamping surface 104 of the first sub element 102a will be pressed against the outer circumferentially extending surface portion 12a of the rotary shaft 12 via the joint interaction of the taper washer 103c acting on the second sub element 102b and the second sub element 102b in turn acting on the first sub element 102a. More specifically, when the tightening the releasable fastening member 116, i.e. the screw 116, the taper washer 103c will slidingly bear against the taper washer interaction surface 103b:2 such that the second sub element 102b is forced radially inwards I. When the second sub element 102b is forced radially inwards I, the second sub element 120b will be translated inwards I. The translation of the second sub element 102b inwards I will in turn result in that the first sub element is forced radially inwards I and in the first axial direction AD while the second sub element interaction surface 130b:1 slidingly bears against the first sub element interaction surface 103a as have been described above. When the first sub element 120a is forced radially inwards, the shaft clamping surface 104 is pressed against the outer circumferentially extending surface portion 12a of the rotary shaft 12. Further, since the first sub element 102a is forced in the first axial direction AD, the fixture element 102 will be even more forced radially inwards I while the opening abutment surface 110 slidingly bears against the inwardly facing surface portion 52a as have been explained above in conjunction with Figs. 2, 3 and 5. In practice, the most outspoken pressing of the shaft clamping surface 104 against the outer circumferentially extending surface portion 12a of the rotary shaft 12 will according to the design of Figs. 7A and 7B emanate from the opening abutment surface 110 slidingly bearing against the inwardly facing surface portion 52a when the first sub element 102a is translated in the first axial direction AD.

Further, as best illustrated in Fig. 7A, the fixture element may comprise a lock washer 105a configured to hold the taper washer 102c in relation to the second sub element 102b. To this end, the lock washer 105a may, as best illustrated in Fig. 7A, be configured to engage a groove 105b of the second sub element 102b. In this way, the taper washer 102c and the second sub element may be prevented or counteracted from being unintentionally separated.

Further, as best illustrated in Fig. 7A the first sub element 102a and the second sub element 102b may interact via a sliding arrangement 107a. In this way, the first sub part 102a may be slid along the second sub element interaction surface 103b:1 of the second sub element 102b while at the same time being prevented or counteracted from being separated from the second sub part 102b.

The sliding arrangement 107a may as best illustrated in Fig. 7A be complemented by a stop arrangement 107b configured to prevent or counteract that the first sub part is slid too far along the second sub element interaction surface 103b:1 of the second sub element 102b. The stop arrangement 107b may, as illustrated in Figs. 7A and 7B, comprise a spring loaded ball 107c which is configured to releasably engage a mating recess 107d. The mating recess 107d may have an extension allowing that the second sub element interaction surface 130b:1 slidingly bears against the first sub element interaction surface 103a to a certain degree without the spring loaded ball 107c disengaging the mating groove 107d. In this way, the first sub element 102a and the second sub element 102b may be prevented or counteracted from being unintentionally separated.

Hence, the fixture element 102 be prevented or counteracted from being unintentionally separated by the lock washer 105a, the sliding arrangement 107a and the stop arrangement 107b.

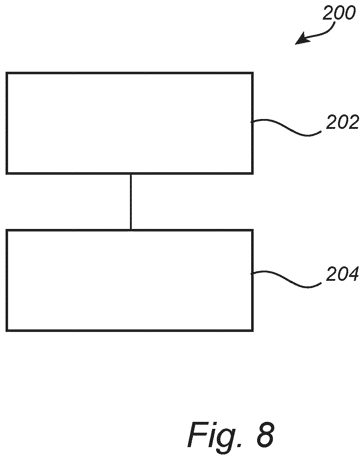

Now turning to Fig. 8. Fig 8 is a flow chart of a method 200 of releasably fixing a rotary shaft a rotary shaft 12 of an agitator system 1 extending into a vessel 50 through an opening 52 in the vessel 50 in a first axial direction AD, using a shaft fixture arrangement 100 of the above-describe kind.

The method 200 includes positioning 202 the two or more fixture elements 102 circumferentially distributed around a circumference of the rotary shaft 12, such that the shaft clamping surface 104 of each fixture element 102 abuts a respective outer circumferentially extending surface portion 12a of the rotary shaft 12.

The method 200 proceeds by translating 204 the two or more fixture elements 102 in the first radial direction AD while the opening abutment 110 surface of each fixture element 102 slidingly bears against a respective inwardly facing surface portion 52a surrounding the opening 52, along a portion of a circumference of the inwardly facing portion 52, such that each fixture element 102 is forced radially inwards I while its associated shaft clamping surface 104 is pressed against the associated outer circumferentially extending surface portion 12a of the rotary shaft 12. In this way, the rotary shaft 12 is fixed in relation to the opening 52 by the two or more fixture elements 120 jointly clamping the rotary shaft 12 therebetween.

It will be appreciated that the present inventive concept is not limited to the variants and examples shown. Several modifications and variations are thus conceivable within the scope of the invention which is defined by the appended claims.

## Claims

1. A shaft fixture arrangement (100) for releasably fixing a rotary shaft (12) of an agitator system (10) extending into a vessel (50) through an opening (52) in the vessel (50) in a first axial direction (AD), the shaft fixture arrangement (100) comprising:
two or more fixture elements (102) configured to jointly fix the rotary shaft (12) in relation to the opening (52) by engaging the rotary shaft (12) such that the rotary shaft (12) is clamped between the two or more fixture elements (102), each fixture element (102) comprising,
an inwardly facing circumferentially extending shaft clamping surface (104) configured to abut an outer circumferentially extending surface portion (12a) of the rotary shaft (12), wherein the shaft clamping surface (104) comprises a protrusion (106, 106a, 106b) configured to engage a recess (12b) of the rotary shaft and/or wherein the shaft clamping surface comprises a recess (108, 108a, 108b) configured to engage a protrusion (12c) of the rotary shaft (12), wherein the protrusion (106, 106a, 106b, 12c) and the recess (108, 108a, 108b, 12b) are jointly configured to, when engaging, counteract a relative movement between the fixture element (102) and the rotary shaft (12) along the first axial direction (AD), and
an outwardly facing circumferentially extending opening abutment surface (110), wherein the opening abutment surface (110) is configured to abut an inwardly facing surface portion (52a) surrounding the opening, along a portion of a circumference of the inwardly facing portion (52a), wherein the opening abutment surface (110) is inclined towards the shaft clamping surface (104) as seen along the first axial direction (AD), whereby the fixture element (102) is forced radially inwards (I) when being translated in the first axial direction (AD) while the opening abutment surface (110) slidingly bears against the inwardly facing surface portion (52a), thereby pressing the shaft clamping surface (104) against the outer circumferentially extending surface portion (12a) of the rotary shaft (12).

2. The shaft fixture arrangement (100) according to claim 1, wherein an extension (E1) of the shaft clamping surface (104) along the first axial direction (AD) lies in a range of 10mm to 100mm, such as 20mm to 50mm.

3. The shaft fixture arrangement (100) according to claim 1, wherein an extension (E1) of the shaft clamping surface (104) along the first axial direction (AD) corresponds to 50% to 200%, such as 100% to 150%, of a diameter (D) of the rotary shaft.

4. The shaft fixture arrangement according to any one of the preceding claims, wherein a circumferential extension of the shaft clamping surface lies in a range of 20% to 40%, such as 20% to 30% or 25% to 35%, of a circumference of the outer circumferentially extending surface portion of the rotary shaft.

5. The shaft fixture arrangement (100) according to any one of the preceding claims, wherein the opening abutment surface (110) is inclined towards the shaft clamping surface (104) with an angle (α) in a range of 5 degrees to 45 degrees, such as 10 degrees to 20 degrees.

6. The shaft fixture arrangement (100) according to any one of the preceding claims, wherein the protrusion (106, 106a, 106b) of the shaft clamping surface (104) and/or the protrusion (12c) of the rotary shaft (12) comprises a circumferentially extended protrusion (106, 106a, 12c), such as a fin.

7. The shaft fixture arrangement (100) according to any one of the preceding claims, wherein the recess (108, 108a, 108b) of the shaft clamping surface (104) and/or the recess (12b) of the rotary shaft (12) comprises a circumferentially extended recess (108, 108a, 12b), such as a groove.

8. The shaft fixture arrangement (100) according to any one of the preceding claims, wherein the fixture element (102) further comprises a vessel abutment surface (112) extending radially outwards (O) in a plane perpendicular to the first axial direction (AD), wherein the vessel abutment surface (112) is configured to abut an outer surface portion (56) associated with the vessel (50) positioned radially outside (O) of the opening (52) and facing in a direction opposite to the first axial direction (AD).

9. The shaft fixture arrangement (100) according to any one of the preceding claims, wherein the fixture element (102) further comprises a fastening opening (114) extending along the first axial direction (AD), the fastening opening (114) being configured to receive a releasable fastening member (116), such as a screw, for releasably fastening the fixture element (102) to an outer surface portion (56) associated with the vessel (50) positioned radially outside (O) of the opening (52) and facing in a direction opposite to the first axial direction (AD).

10. The shaft fixture arrangement (100) according to any one of the preceding claims, wherein the fixture element (102) comprises a first sub element (102a) and a second sub element (102b), wherein the first sub element (102a) comprises the shaft clamping surface (104) and the opening abutment surface (110), whereby at least the first sub element (102a) is forced radially inwards (I) when being translated in the first axial direction (AD) while the opening abutment surface (110) slidingly bears against the inwardly facing surface portion (52a), thereby pressing the shaft clamping surface (104) against the outer circumferentially extending surface portion (12a) of the rotary shaft (12).

11. The shaft fixture arrangement (100) according to claim 10, wherein the first sub element (102a) comprises an inclined outwardly facing first sub element interaction surface (103a), wherein the first sub element interaction surface (103a) is inclined away from the shaft clamping surface (104) as seen along the first axial direction (AD), and wherein the second sub element (102b) comprises an inclined inwardly facing second sub element interaction surface (103b:1), wherein the second sub element interaction surface (130b:1) is inclined away from shaft clamping surface (104) as seen along the first axial direction (AD), whereby the first sub element (102a) is forced radially inwards (I) and in the first axial direction (AD) when the second sub element (102b) is translated in the first axial direction (AD) while the second sub element interaction surface (130b:1) slidingly bears against the first sub element interaction surface (103a).

12. The shaft fixture arrangement (100) according to claim 10 or 11, when dependent on claim 9, wherein the fixture element (102) further comprises a taper washer (102c) configured to receive the releasable fastening member (116), wherein the fastening opening (114) is provided in the second sub element (102b) and is at least partially surrounded by an inclined outwardly facing taper washer interaction surface (103b:2), wherein the taper washer interaction surface (103b:2) is inclined away from the shaft clamping surface (104) as seen along the first axial direction (AD), whereby the second sub element (102b) is forced radially inwards (I) while the taper washer (102c) slidingly bears against the taper washer interaction surface (103b:2), when being translated in the first axial direction (AD).

13. The shaft fixture arrangement (100) according to any one of the preceding claims, wherein the shaft fixture arrangement (100) comprises three or more fixture elements (102).

14. A system (20) for releasably fixing a rotary shaft (12) of an agitator system (1) extending into a vessel (50) through an opening (52) in the vessel (50) in a first axial direction (AD), the system (20) comprising:
a shaft fixture arrangement (100) according to any one of the preceding claims,
the rotary shaft (12), and
the vessel (50).

15. A method (200) of releasably fixing a rotary shaft (12) of an agitator system (1) extending into a vessel (50) through an opening (52) in the vessel (50) in a first axial direction (AD), using a shaft fixture arrangement (100) according to any one of claims 1-14, the method (200) comprising:
positioning (202) the two or more fixture elements (102) circumferentially distributed around a circumference of the rotary shaft (12), such that the shaft clamping surface (104) of each fixture element (102) abuts a respective outer circumferentially extending surface portion (12a) of the rotary shaft (12), and
translating (204) the two or more fixture elements (102) in the first radial direction (AD) while the opening abutment (110) surface of each fixture element (102) slidingly bears against a respective inwardly facing surface portion (52a) surrounding the opening (52), along a portion of a circumference of the inwardly facing portion (52), such that each fixture element (102) is forced radially inwards (I) while its associated shaft clamping surface (104) is pressed against the associated outer circumferentially extending surface portion (12a) of the rotary shaft (12), thereby fixing the rotary shaft (12) in relation to the opening (52) by the two or more fixture elements (120) jointly clamping the rotary shaft (12) therebetween.
